# EUROPÄISCHE PATENTSCHRIFT

(11) **EP 0 530 534 B1**
(45) Veröffentlichungstag und Bekanntmachung des Hinweises auf die Patenterteilung: **20.07.1994**
(21) Anmeldenummer: 92113481.3
(22) Anmeldetag: 07.08.1992
(51) Int. Cl.: H05B 7/06, F27B 3/12, F27D 11/10

(54) **Ausmauerung für einen Gleichstrom-Lichtbogenofen**
Lining for a direct-current arc furnace
Chemise de four pour un four à arc à courant continu

(30) Priorität: 09.08.1991 US 743146
(43) Veröffentlichungstag der Anmeldung: 10.03.1993
(73) Patentinhaber: DEUTSCHE VOEST-ALPINE INDUSTRIEANLAGENBAU GMBH, 40094 Düsseldorf (DE)
(72) Erfinder: Meredith, Dane, Brandon, Florida 33511 (US)
(74) Vertreter: Pfenning, Meinig & Partner

(56) Entgegenhaltungen:
- EP-A- 0 258 101
- EP-A- 0 422 406

## Beschreibung

Die Erfindung betrifft eine Ausmauerung für einen Gleichstrom-Lichtbogenofen nach dem Oberbegriff des Anspruches 1.

Aus der EP-A- 0 422 406 ist ein Gleichstrom-Lichtbogenofen bekannt, bei dem der die Schmelze aufnehmende Bereich aus einer elektrisch leitenden Feuerfest-Ausmauerung besteht. Um diese elektrisch leitende Ausmauerung ist ein zylinderförmiger Stromleiter in Form eines Kupferringes herumgelegt. Beide, die leitende Ausmauerung und der Kupferring, bilden gemeinsam die Anode des Gleichstrom-Lichtbogenofens.

Die Ausmauerung besteht aus mehreren Schichten. Die Schicht, die mit der Metallschmelze in direkter Berührung steht, ist aus einem elektrisch leitenden verschleiß- und feuerfesten Material gebildet. Auf der Schicht, die als Ausmauerung vorliegt, wird zum Zwecke des Ausgleiches von Unebenheiten eine Schicht aus elektrisch leitender Stampfmasse aufgetragen. Dieser Teil der Ausmauerung soll z.B. aus Karbon-Magnesit bestehen.

Unterhalb dieser Schicht ist eine Schicht aus Graphitsteinen, die eine wesentlich höhere elektrische Leitfähigkeit besitzen, angeordnet. Die Stärke der Schicht vergrößert sich zum Außenrand und entspricht dort der Höhe des Kupferringes, so daß ein günstiger Stromübergang gewährleistet ist.

An diese Schicht schließt sich eine Schicht aus elektrisch isolierenden feuerfesten Steinen an, die den gesamten Bodenbereich des Ofens ausfüllt und eine Wärmeisolierung gewährleistet.

Die elektrische Leitfähigkeit der dem Schmelzbad zugewandten Schicht und die damit verbundene Badrührung bewirkt eine relativ gleichförmige Temperaturverteilung im Schmelzgut. Durch den Kohlenstoffgehalt der Karbon-Magnesit-Steine kann es beim Schmelzen von Stahl mit gezielt niedrigem Kohlenstoffgehalt jedoch zur ungewollten Aufkohlung der Stahlschmelze kommen. Kommt es weiterhin durch Fehler beim Schmelzen, z.B. ungenügender Sumpf oder mechanische Einwirkungen von Einsatzmaterial oder Oberelektrode, zur Beschädigung der der Schmelze zugewandten Schicht, so daß das Schmelzbad in direkter Berührung an die Graphitsteine gelangt, so können diese in Lösung gehen, und die Ausmauerung kann so stark beschädigt werden, daß eine umfangreiche Reparatur erforderlich wird. Im Extremfall kann ein Schmelzbaddurchbruch durch den Herd erfolgen.

Hier setzt die Erfindung ein, deren Aufgabe es ist, den Herdbereich eines Gleichstrom-Lichtbogenofens so auszuführen, daß seine Verschleißfestigkeit erhöht und das Eindringen von Kohlenstoff insbesondere aus dem mittleren Bereich des Herdes in die Schmelze weitestgehend verhindert wird.

Erfindungsgemäß wird diese Aufgabe durch die im Kennzeichen des Anspruches 1 genannten Merkmale gelöst.

Vorteilhafte Weiterbildungen und Ausführungsformen beinhalten die Merkmale der abhängigen Ansprüche.

Dadurch, daß zumindest der mittlere Herdbereich, der durch eine monolithische Stampfmasse, die überwiegend aus Magnesit besteht, gebildet wird, das bei Erwärmung durch die Schmelze einen Sinterungsvorgang durchläuft, entsteht in diesem Bereich eine hochverschleißfeste Masse, die nicht elektrisch leitend ist und auch keine elektrischen Leiter enthält.

Die elektrisch leitende feuerfeste Ausmauerung (ff-Ausmauerung) und der ringförmige Teil der Ausmauerung, der aus Graphitsteinen besteht, sichern nach wie vor den Stromfluß zwischen Anode und Schmelze und gewährleisten einen entsprechenden Kontakt mit dem Schmelzgut, auch beim Kaltstart.

Durch die Sinterung der aus Magnesit bestehenden Stampfmasse und durch den verzahnten Übergang mit der elektrisch leitenden ff-Ausmauerung, die aus Karbon-Magnesit besteht, wird die Penetration von Stahl besonders im Übergang zwischen den beiden Bereichen verhindert.

Sollten trotz der höheren Verschleißfestigkeit doch Reparaturen des Bodens erforderlich sein, so ist eine Ausbesserung bzw. Auswechslung der Stampfmasse im zentralen Bodenbereich wesentlich unaufwendiger als eine Ausbesserung einer entsprechenden bereits bekannten Ausmauerung.

In einfacher Weise können Spüleinrichtungen, wie sie zum Homogenisieren der Schmelze (z.B. mit Stickstoff oder Argon) Verwendung finden, in einer Form im mittleren Herdbereich in die Stampfmasse eingebettet werden. Vorteilhafterweise sollten diese Einrichtungen ebenfalls aus nichtleitendem feuerfesten Material bestehen. Das Einbringen dieser Homogenisierungsmittel in der Mitte des Schmelzbades wirkt sich besonders günstig auf ihre Wirkung aus.

Dadurch, daß der Übergang zwischen der elektrisch leitenden ff-Ausmauerung und dem aus Graphitsteinen bestehenden ringförmigen Teil miteinander verschränkt ausgeführt sind, ist ein guter Stromübergang nach wie vor gewährleistet.

Nachfolgend soll die Erfindung anhand eines Ausführungsbeispieles näher erläutert werden.

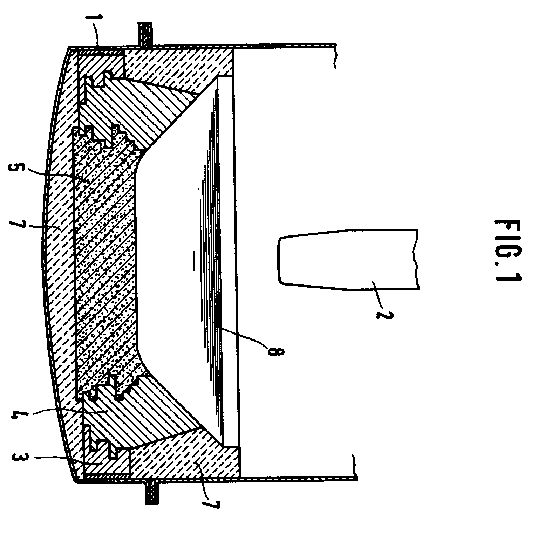

In Fig. 1 ist ein Längsschnitt durch den erfindungsgemäßen Gleichstrom-Lichtbogenofen dargestellt.

Der Lichtbogenofen weist einen ringförmigen, aus Kupfer bestehenden Stromleiter 1, der einen Teil der Anode bildet, auf. Die Kathode 2 befindet sich zentrisch oberhalb der Schmelze. Auf dem aus vorzugsweise Stahl bestehenden Bodenteil ist eine feuerfeste isolierende Ausmauerung 7 vorgesehen. Direkt an dem als Kupferring ausgebildeten Stromleiter 1 ist ein ringförmiger Teil der Ausmauerung, der aus Graphitsteinen 3 besteht, in direkter elektrisch leitender Verbindung mit dem Stromleiter 1 vorgesehen. An diesen ringförmigen Teil aus Graphitsteinen 3 schließt sich ein weiterer Teil der Ausmauerung, der aus elektrisch leitendem ff-Material 4 besteht, an. Beide Bereiche sind miteinander verschränkt. Der Bereich der Ausmauerung, der aus elektrisch leitendem ff-Material 4 besteht, ist ebenfalls ringförmig ausgeführt. Dieser Bereich besteht vorzugsweise aus Karbon-Magnesit-Steinen.

Im Mittelbereich des Herdes, der mit der Schmelze in direkten Kontakt kommt, ist eine Stampfmasse 5, die vorzugsweise hauptsächlich aus Magnesit besteht, eingebracht. Durch verzahnte Ausführung der elektrisch leitenden ff-Ausmauerung 4 in Richtung des mittleren Herdbereiches, der durch die monolithische Stampfmasse 5 gebildet wird, kommt es zur innigen Verbindung beider Bereiche. Gegebenenfalls können hier noch isolierende Steine als Übergang eingefügt werden, die wegen ihres thermischen Verhaltens die Verbindung noch verbessern. In Zusammenhang mit der Sinterung des als Stampfmasse verwendeten Magnesits wird die Penetration von Stahl in diesem kritischen Übergangsbereich verhindert.

In einer weiteren Variante kann im unteren Bodenbereich, dort, wo die monolithische Stampfmasse angeordnet ist, auf die untere feuerfeste isolierende Ausmauerung 7 verzichtet werden.

Außerdem ist es möglich, wie nicht in der Figur dargestellt, Leitungen im mittleren Herdbereich vorzusehen, die in die Stampfmasse eingebettet sind und durch die z.B. Stickstoff oder Argon für die Homogenisierung der Schmelze zugeführt werden können. Diese Leitungen sollten ebenfalls aus nichtleitendem und feuerfestem Material bestehen.

In der einfacheren Ausführungsform ohne diese Spüleinrichtungen kann es im Havariefalle, d.h. bei Zerstörung des Herdbereiches, zu keiner Gefährdung kommen, da im Bodenbereich keine zusätzlichen Einrichtungen vorhanden sind, die für den Betrieb des Ofens erforderlich sind.

Bei einem Außendurchmesser des Ofens von 5,2 m ist die Ausdehnung des mittleren Herdbereiches, der durch eine monolithische Stampfmasse 5 gebildet wird, in seinem Durchmesser 2 m, soll jedoch mindestens 20 % des Gesamtaußendurchmessers ausfüllen.

## Patentansprüche

1. Ausmauerung für einen Gleichstrom-Lichtbogenofen, bei dem wenigstens ein Teil des die Schmelze (8) aufnehmenden Bereiches des Ofens auf der Innenseite mit elektrisch leitender feuerfesten Ausmauerung versehen ist und an deren Außenseite ein ringförmiger Stromleiter (1) den Gegenpol zu der mittig in den Ofen ragenden Oberelektrode (2) bildet,
dadurch **gekennzeichnet,**
daß der gesamte Bodenbereich mit einer feuerfesten isolierenden Ausmauerung (7) bedeckt ist,
daß auf dieser Ausmauerung im radial äußeren Wandbereich des Ofens eine Ausmauerung aus Graphitsteinen (3) aufgebracht ist,
daß sich hieran anschließend radial nach innen eine Ringzone aus einer elektrisch leitenden feuerfesten Ausmauerung (4) befindet,
daß der mittlere Bodenbereich oberhalb der isolierenden Ausmauerung (7) durch eine monolithische Stampfmasse (5) gebildet ist, und
daß das Material der Wandung des Ofens oberhalb der Ausmauerung aus Graphitsteinen (3) demjenigen der isolierenden Ausmauerung (7) über dem Herdboden weitgehend entspricht.

2. Ausmauerung nach Anspruch 1,
dadurch gekennzeichnet, daß die monolithische Stampfmasse (5) wenigstens zu einem erheblichen Teil aus Magnesit besteht.

3. Ausmauerung nach Anspruch 1 und 2,
dadurch gekennzeichnet, daß die den ringförmigen Teil der Bodenausmauerung bildenden Graphitsteine (3) in direktem Berührungskontakt mit dem Stromleiter (1) sind.

4. Ausmauerung nach Anspruch 1 bis 3,
dadurch gekennzeichnet, daß die elektrisch leitende feuerfeste Ausmauerung (4) ausgezahnt in den mittleren, aus Stampfmasse (5) bestehenden Herdbereich ragt.

5. Ausmauerung nach Anspruch 1 bis 4,
dadurch gekennzeichnet, daß im Übergang zwischen der elektrisch leitenden feuerfeste Ausmauerung (4) und der monolithischen Stampfmasse (5) isolierende Steine angeordnet sind.

6. Ausmauerung nach Anspruch 1 bis 5,
dadurch gekennzeichnet, daß der aus Graphitsteinen (3) bestehende Herdbereich und die elektrisch leitende feuerfeste Ausmauerung (4) miteinander verschränkt/verzahnt sind.

7. Ausmauerung nach Anspruch 1 bis 6,
dadurch gekennzeichnet, daß im mittleren, aus monolithischer Stampfmasse (5) gebildeten Herdbereich Leitungen zur Zuführung von Homogenisierungsmittel in das Schmelzbad eingebettet sind.

8. Ausmauerung nach Anspruch 1 bis 7,
dadurch gekennzeichnet, daß der Durchmesser des mittleren, aus monolithischer Stampfmasse (5) gebildeten Herdbereiches mindestens 20 % des gesamten Ofendurchmessers einnimmt.

## Claims

1. Lining for a direct-current arc furnace, providing at least a portion of the furnace area which accommodates the molten mass (8) internally with an electrically conductive fireproof lining and with an external annular current conductor (1) as a counter-pole of the top electrode (2) which protrudes centrally into the furnace, **characterised in that**
the entire bottom area is covered by a fireproof insulating lining (7),
this lining is in the outer radial wall area of the furnace fitted with a lining of graphite stones (3),
the latter is adjoined in the radially inward direction by a circular zone of an electrically conductive fireproof lining (4),
the middle bottom area above the insulating lining (7) is formed by a monolithic ramming compound (5), and
the material of the furnace wall above the graphite-stone lining (3) substantially corresponds with that of the insulating lining (7) above the hearth bottom.

2. Lining according to claim 1, **characterised in** **that** the monolithic ramming compound (5) is at least substantially composed of magnesite.

3. Lining according to claim 1 and 2, **characterised** **in that** the graphite stones (3) which form the annular portion of the bottom lining are in direct contact with the current conductor (1).

4. Lining according to claim 1 to 3, **characterised** **in that** the electrically conducting fireproof lining (4) extends in a ragged manner into the middle hearth area which is composed of a ramming compound (5).

5. Lining according to claim 1 to 4, **characterised** **in that** insulating stones are arranged in the transitional area between the electrically conductive fireproof lining (4) and the monolithic ramming compound (5).

6. Lining according to claim 1 to 5, **characterised** **in that** the hearth area which is composed of graphite stones (3) and the electrically conducting fireproof lining (4) are crossed/toothed relative to each other.

7. Lining according to claim 1 to 6, **characterised** **in that** pipes for feeding homogenizing means into the melt are embedded in the middle hearth area which is composed of a monolithic ramming compound (5).

8. Lining according to claim 1 to 7, **characterised** **in that** the diameter of the middle hearth area which is composed of monolithic ramming compound (5) covers at least 20% of the entire furnace diameter.

## Revendications

1. Garnissage pour un four à arc à courant continu, dans lequel au moins une partie de la zone du four qui reçoit la masse à fondre ou fondue (8) est munie du côté interne d'un garnissage réfractaire et électriquement conducteur et en ce que, sur le côté externe, un conducteur de courant (1) annulaire forme le pôle opposé à l'électrode supérieure (2) qui fait saillie au milieu dans le four, caractérisé en ce que:
- toute la zone de sole est couverte d'un garnissage (7) réfractaire et isolant,
- sur ce garnissage est appliqué dans la zone de paroi radialement externe du four un garnissage en briques de graphite (3)
- se raccordant à cela radialement vers l'intérieur, il y a une zone annulaire constituée d'un garnissage (4) réfractaire et électriquement conducteur,
- la zone médiane de sole est formée au-dessus du garnissage isolant (7) par un pisé réfractaire monolithique (5) et
- la matière de la paroi du four, au-dessus du garnissage en briques de graphite (3), correspond amplement à celle du garnissage isolant (7) au-dessus de la sole du creuset.

2. Garnissage suivant la revendication 1, caractérisé en ce que le pisé (5) monolithique est constitué au moins pour une partie importante de magnésite.

3. Garnissage suivant la revendication 1 ou 2, caractérisé en ce que les briques de graphite (3) qui forment la partie annulaire du garnissage de sole sont en contact directe avec le conducteur de courant (1).

4. Garnissage suivant l'une des revendications 1 à 3, caractérisé en ce que le garnissage (4) réfractaire et électriquement conducteur fait saillie de façon imbriquée dans la zone médiane de creuset constituée par le pisé (5).

5. Garnissage suivant l'une quelconque des revendications 1 à 4, caractérisé en ce que des briques isolantes sont agencées dans la zone de transition entre le garnissage (4) réfractaire et électriquement conducteur et le pisé monolithique (5).

6. Garnissage suivant l'une quelconque des revendications 1 à 5, caractérisé en ce que la zone de creuset constituée de briques de graphite (3) et le garnissage (4) réfractaire et électriquement conducteur sont imbriqués/entrelacés l'un avec l'autre.

7. Garnissage suivant l'une quelconque des revendications 1 à 6, caractérisé en ce que des conduites pour l'amenée de milieu d'homogénéisation dans le bain de matière fondue sont incorporées dans la zone médiane de creuset formée en pisé monolithique (5).

8. Garnissage suivant l'une quelconque des revendications 1 à 7, caractérisé en ce que le diamètre de la zone médiane de creuset formée en pisé monolithique (5) occupe au moins 20% du diamètre total du four.
